# EUROPEAN PATENT APPLICATION

(11) **EP 1 924 091 A1**
(43) Date of publication of application: **21.05.2008**
(21) Application number: 06782277.5
(22) Date of filing: 03.08.2006
(51) Int. Cl.: H04N 5/76, H04N 5/91, H04N 7/173

(54) **DATA RECORDING DEVICE, DATA REPRODUCTION DEVICE, PROGRAM, AND RECORDING MEDIUM**

(30) Priority: 09.08.2005 JP 2005231087; 27.10.2005 JP 2005313212
(71) Applicant: Sharp Kabushiki Kaisha, Osaka-shi, Osaka 545-8522 (JP)
(72) Inventor: INOUE, Satoru, Chiba-shi, Chiba 266-0031 (JP); ITOH, Norio, Chiba-shi, Chiba 266-0031 (JP); SHIOI, Masahiro, Tokyo, 136-0072 (JP); HASEGAWA, Shinya, Chiba-shi, Chiba 262-0033 (JP); OHARA, Akemi, Chiba 274-0063 (JP)
(74) Representative: Müller - Hoffmann & Partner
(86) International application number: PCT/JP2006/315417
(87) International publication number: WO 2007/018126

(57) **Abstract**

A data recording device of the invention has: a reception state acquisition processing section (21) for creating a reception state value on whether the reception state of a broadcast content is good or poor; a recording data creation process section (22) for creating recording data from them; and a recording control processing section (20) for comparing the reception state with a threshold value when there is a change in the reception state value, and controlling whether to pass the recording data to the recording data creation processing section (22). A data reproduction device of the invention has: a formatting analysis processing section for analyzing a format of the recorded data read from a recording medium and extracting the reception state value and the broadcast content; a reproduction control processing section for controlling reproduction of the received data according to the reception state value; a decoding section for decoding the content according to the reproduction control; and an output section for outputting the decoded content. This provides the data recording device capable of reducing a memory amount required for recording the content and the data reproduction device capable of reducing unpleasant feelings felt by a user upon reproduction of a content.

## Description

### TECHNICAL FIELD

The present invention relates to a data recording device which records a received broadcast content, and a data reproduction device which reproduces a recorded broadcast content.

### BACKGROUND ART

Recently, there has been a widespread of portable broadcast receivers which can receive terrestrial television broadcast and satellite television broadcast in addition to conventional terrestrial radio broadcast without regard to location such as indoor or outdoor or even while walking. In these portable broadcast receivers, there are ones that comprise a function to record a received broadcast program (content) on a recording medium such as a hard drive or a semiconductor memory and reproduce such broadcast program.

Compared to a non-mobile receiver with a fixed antenna, a portable receiver generally has such a problem in that a radio wave environment of a broadcast wave change time to time with movement, and when the reception state is poor, a part of the received content is lacked and would become unable to reproduce.

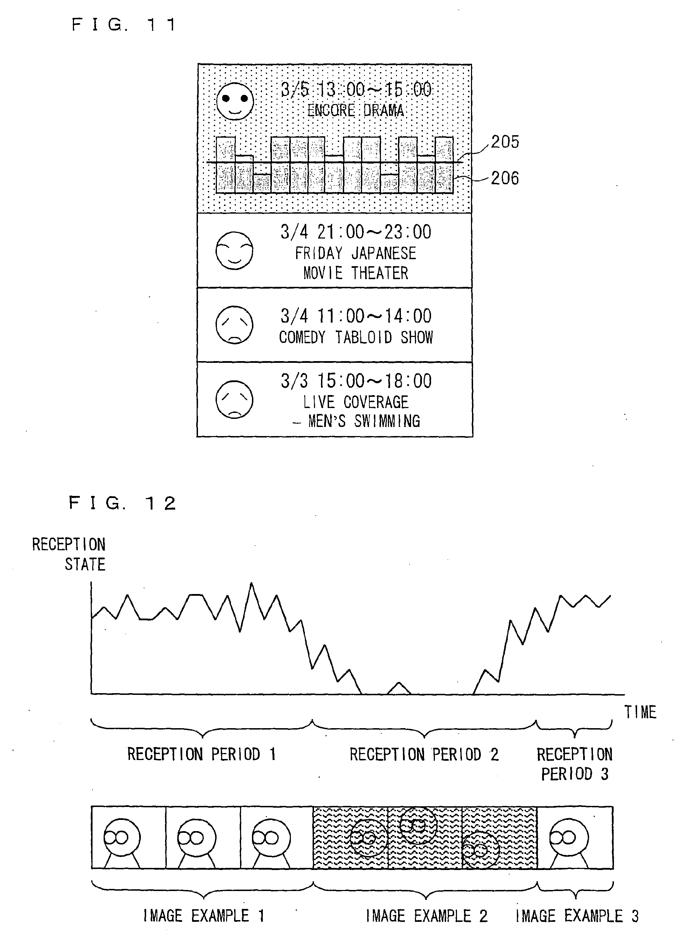

Fig. 12 is a figure illustrating relationship between a graph of a reception state of a content and the lack in the received content. In this figure, the vertical line of the graph represents the reception state. The bigger value on the vertical line indicates a better reception state. The horizontal line in the graph indicates elapsed time in reception of a content. In reception period 1, the reception state is good so the received image is good as in image example 1. In reception period 2, the reception state is poor, so the received image is also poor as in image example 2. When the reception state recovers in reception period 3, the received image also recovers to a good image quality as in image example 3. When the reception state is poor, errors occur such as having an error incorporated in the received data, or a part of the data is lacked.

Recording received data including such error on a recording medium results in recording the content still including the error in the case the error parts cannot be detected and modified. Therefore for example, the user will either have to reproduce and watch the content of low quality with the errors included, or would need to do some kind of operation such as fast forwarding the reproduction in order to find parts where such errors have not occurred. As such, the reproduction of content which includes errors has the problem of the decrease in pleasantness and convenience when reproducing.

In order to solve these problems, a proposal has been made of a technology to control the reproduction of the content, wherein an error rate indicating in what degree the received content has an error is recorded together with the content, and when reproducing the content, the reproduction of the content is controlled according to this recorded error rate.

For example, a DAB (Digital Audio Broadcasting) audio recording reproduction device is described in Patent Document 1, wherein an error information is recorded in a frame of an audio data to be recorded on a semiconductor memory at the same time, when there is a high possibility a large error exists in the audio data. Whether there is a high possibility or not is determined from detecting error information such as a reception electric field strength, a convolutional code rate of a received audio data, or a symbol error information from the ratio that errors were modified in the error modification section. When the DAB audio recording reproduction device reproduces the audio data recorded from the semiconductor memory, a reproduction audio signal is adjusted based on the recorded error information, such as muting the output audio signal.

The DAB audio recording reproduction device comprises error information detection means, means for recording the error information and a DAB reception audio data in a memory, means for retrieving the error information when reproducing the audio data recorded in the memory, and means for adjusting a reproduction audio signal when the error information is retrieved.

By performing a muting process according to whether the reception state is good or poor, the DAB audio recording reproduction device can control the occurrence of harsh sounds when a content of poor reception state is reproduced.

However, in the device described in Patent Document 1, error information is continuously recorded while error detection means is detecting errors, so if the state with a poor reception state continues for a long period of time, the amount of data of error information to be recorded becomes voluminous, and consumes a great part of the memory. For example, in a MPEG2 audio frame, in the case the sampling grade is 44KHz (44,000 samples per second), one frame has 1,000 samples, and 44 frame recordings are recorded per second. If the data size of the error information being added per frame is 4 bytes, it will become an increase of 640KB in an hour.

Furthermore, of the contents in which error information detection means detects errors depending on the degree of error before the contents being recorded by the device described in Patent Document 1, there are contents in which the reproduction of the video or the audio is completely impossible, while the other just have disturbance of the video or the audio when reproducing the content. Recording such content to the memory is a waste of memory.

### PATENT DOCUMENT 1

Japanese Unexamined Patent Publication, *Tokukai,* No. 2000-221996 (published on August 11, 2000)

### DISCLOSURE OF INVENTION

The present invention is made in view of such problems, and an object thereof is to provide a data recording device reducing an amount of memory required to record a content, by reducing the required amount of memory when recording to a recording medium a reception state value indicating a degree of errors included in a content, and furthermore selecting a content to be recorded utilizing the reception state value, and, to provide a data reproduction device reducing the unpleasantness caused in reproducing a content by controlling the reproduction of a content which include errors by utilizing the reception state value.

Specifically, the difference between the art disclosed in Patent Document 1 and the art according to the present invention is as follows. In the art disclosed in Patent Document 1, when recording music data onto a semiconductor memory, a controlling section commands to record, together with the music data, information indicating that the music data is a data of when the reception electric field strength is smaller than predefined. That is to say, the received data is always recorded as it is. On the other hand, in the present invention, in the case a reception state value falls below a predefined threshold value and is determined the reception state is poor, at least either of the received broadcast content or the reception state value is not passed onto recording data creation means. That is to say, in the case the reception state is poor, the received data will not be recorded.

### (1) (Data recording device acquiring a reception state value)

In order to solve the aforementioned problems, the data recording device according to the present invention comprises reception state acquisition means for acquiring a reception state of the broadcast content and creating a reception state value indicating whether the reception state is good or poor; recording data creation means for associating the received broadcast content with the reception state value and creating a recording data including the broadcast content and reception state value associated with each other; recording control means for comparing the reception state value with a predefined threshold value, and controlling whether to respectively pass the received broadcast content and the reception state value to recording data creation means based on the reception state value; and data recording means for recording the recording data to a recording medium.

In this structure, reception state acquisition means figures out the reception state when receiving a broadcast content, and creates the reception state value indicating whether the reception state is good or poor: The recording control means, in controlling the passing of created recording data to the recording data creation means for recording on a recording medium, passes the received broadcast content and the reception state value to the recording data creation means in the case where the reception state value exceeds a predefined threshold value and thus a reception state is determined as good. However, in the case the reception state value falls below the predefined threshold value and thus the reception state is determined as poor, at least one of the received broadcast content and the reception state value will not be passed to the recording data creation means. In the case at least one of the received broadcast content and the created reception state value is passed to the recording data creation means, the recording data creation means creates the recording data from the at least one of the broadcast content and the reception state value. The data recording means records the created recording data on the recording medium.

According to the structure, in the case the reception state of the received broadcast content is poor and the reception state value falls below the predefined threshold value, and the recording control means controls that only the reception state value is passed to recording data creation means, the deteriorated broadcast content due to the poor reception state will not be recorded. As a result, the amount of the recording medium consumed when recording the broadcast content can be reduced by not recording the deteriorated broadcast content due to the poor reception state. On the other hand, in the case the reception state of the received broadcast content is poor and the reception state value falls below the predefined threshold value, and the recording control means controls such that only the received broadcast content is passed to recording data creation means, the reception state value which indicates the worsening in the reception state value will not be recorded. As a result, the amount of the recording medium consumed when recording the broadcast content is reduced by not recording the reception state value which indicates the worsening in the reception state value.

### (2) (Data recording device acquiring a reception state value)

Also, in the data recording device of the present invention, in addition to the above structure, the recording control means compares the current reception state value with a reception state value immediately before the current reception state value in controlling the passing of the received broadcast content and the reception state value to the recording data creation means in recording on the recording medium the recording data to be created, and passing the reception state value to recording data creation means only in the case the reception state value has changed.

In this structure, the recording control means, in controlling the passing of the created recording data to the recording data creation means for recording on the recording medium, compares the current reception state value with the reception state value immediately before. In the case the reception state value exceeds the predefined threshold value, the recording control means controls so that in the case there is no change in the reception state value as a result of comparing the current reception state value and the reception state value immediately before, only the received broadcast content is passed to the recording data creation means, and in the case there is a change in the reception state value, both of the received broadcast contents and reception state value is passed to recording data creation means.

In addition, in the case the reception state value is not exceeding the predefined threshold value, the recording control means controls so that if there is no change in the reception state value as a result of comparing the recent reception state value and the present reception state value, the received broadcast content and reception state value are not passed to recording data creation means, and in the case there is a change in reception state value, only the reception state value is passed to recording data creation means.

In the structure, not all the created reception state value is recorded on the recording medium; only the reception state value of when there is a change in reception state value is recorded. With this structure, the amount of the recording medium consumed for recording the reception state value can be reduced.

### (3) (Example of a reception state value: electric field strength or the like is used as a reception state value)

Moreover, the data recording device of the present invention, in addition to the aforementioned structure, comprises reception state acquisition means for calculating the reception state value by utilizing at least one or more of the values of electric field strength, bit error rate, and delay level of broadcast or wireless communication.

In this structure, the reception state acquisition means calculates the reception state value by utilizing at least one or more of the values of electric field strength, bit error rate and delay level, of broadcast or wireless communication in the case digital broadcast is received. In the case of analog broadcast, at least one or more of the values of electric field strength and delay level, of broadcast or wireless communication, is utilized to calculate the reception state value.

According to the structure, the reception state acquisition means can figure out an accurate reception state, and can accurately determine whether or not to record a broadcast content deteriorated by the poor reception state. As a result, appropriate recording of the broadcast content becomes possible.

### (4) (Example of a reception state value: utilizing a reception state value map)

Again, the data recording device of the present invention, in addition to the structure, comprises positional information acquisition means for acquiring a positional information of the data recording device, and a reception state map on which relationship between a position on the map and a reception state value is recorded, the reception state acquisition means retrieving a reception state value for a current position of the data recording device from the reception state map.

In this structure, the positional information acquisition means such as a GPS (Global Positioning System) figures out the current position of the data recording device. The recording state acquisition means acquires the reception state value for the current position from the reception state map created beforehand with the recordings of radio wave condition of each point, that is, the reception state of the broadcast, based on the information of the current position received from the positional information acquisition means.

According to the structure, a reception state value for a current position of the data recording device is one, and thus the amount of memory consumed when recording the reception state value on the recording medium can be largely reduced. In addition, for a portable type or a transportable type of data recording device, the reception state of the current position can be acquired from the reception state map, even in a transferred position of the data recording device.

### (5) (Example of a method for recording a reception state value: rewriting a part of the broadcast content)

Again, in the data recording device of the present invention, in addition to the structure, the recording data creation means creates the recording data including the reception state value in at least one or more of the areas of the video data area, the audio data area, an unused area and a descriptor area of the broadcast content.

In this structure, the recording data creation means performs the step of creating the recording data from a received broadcast content and a reception state value by creating the recording data overwriting the reception state value in at least one or more of the areas of the video data area, the audio data area, the unused area and the descriptor area of the received broadcast content.

According to the structure, the reception state value will be overwritten on a part of the received broadcast content. Thus, the amount of memory consumed when recording the reception state value to the recording medium is the same with the case only the received broadcast content is recorded on the recording medium.

In the case an analog broadcast is digitalized (coded, encoded) and recorded, the reception state value can be recorded in at least one or more of the areas of the video data area, the audio data area, the unused area, and the descriptor area similarly to the aforementioned example. In addition, in the method of VTR or the like where an analog broadcast is recorded as analog on a magnetic tape, the reception state value can be overwritten on the synchronous period (regression period) of the video.

### (6) (Recording an index information)

Also, in the data recording device of the present invention, in addition to the structure, the recording control means obtains a timestamp which is elapsed time information of the received broadcast content by a predetermined method, according to whether the reception state is good or poor and whether or not time information is contained in the received broadcast content; the recording control means acquires record positional information which indicates where the data composing the received broadcast content is positioned in the broadcast content; creates an index information in which the timestamp with the corresponding recorded positional information associate with each other, and passes the index information to the recording data creation means; and the recording data creation means records the index information as an index file.

In this structure, as the predetermined method to obtain a timestamp for creating an index information, in the case the reception state value exceeds the predefined threshold value wherein the broadcast content is a digital broadcast or the like and the timestamp is included in the broadcast content, the recording control means uses for example the timestamp included in the broadcast content as the timestamp.

On the other hand, in the case the reception state value falls below the predefined threshold value, or in the case a broadcast content does not include a timestamp, a new timestamp may be obtained, for example, by keeping a latest and valid timestamp within recording control means beforehand, and adding, to the elapsed time recorded on the timestamp, the time elapsed from the point the timestamp could not obtained from the broadcast content.

The recording control means obtains the timestamp and the positioning of where the content of the received broadcast content corresponding to each timestamp is recorded in the broadcast content as the recorded positional information, and passes such timestamp and recorded positional information associated with each other to the recording data creation means as the index information.

The recording data creation means records the index information together as the index file.

According to the structure, even if it is a section where the received data is not included in the recording data since the reception state is poor, the index information will still be recorded. Therefore, when the data reproduction device performs special reproduction using the index information such as fast forwarding, rewinding, and resuming reproduction from the position the reproduction was stopped previously, the data reproduction device can perform the special reproduction of even the section where the received data is not included in the recording data, at the same speed as other sections.

### (7) (Recording contents and index information indicating poor reception state)

Also, in the data recording device of the present invention, in addition to the structure, if the reception state value falls below the predefined threshold value, the recording control means creates at least one of a video content and audio content indicating a poor reception state, or retrieves at least one of a video content and audio content indicating the poor reception state which is already created beforehand and stored, and inserts the at least one of a video content and audio content to the broadcast content; the recording control means creates an index information utilizing record positional information of the inserted content; and includes the created content and the index information in the information to be passed to the recording data creation means.

In this structure, a message written as 'broadcast cannot be received' converted as a video content or audio content is an example of the video content or audio content indicating poor reception state.

The recording control means inserts the content which is created and kept beforehand or created at the point when the reception state value falls below the predefined threshold value into the broadcast content, as a substitute of the section with poor reception state in the broadcast contents, and passes this to recording data creation means.

In addition, the record positional information of the inserted content is used as the record positional information being used when creating the index information.

According to the structure, the index information is used when special reproduction such as fast forwarding and rewinding are operated, therefore the inserted content is reproduced. Consequently, even with data reproduction devices which do not have a special structure, the sections in the broadcast contents which could not be received is indicated to the user while operating special reproduction.

### (8) (Data reproduction device producing the reception state value)

In order to solve the problems, the data reproduction device according to the present invention, wherein the data reproduction device reproduces a recorded broadcast content, comprises data retrieving means for retrieving the recording data from the recorded medium in which the recording data is written, the recording data including the reception state value and broadcast content received from the aforementioned data recording device; formatting analysis means for analyzing a format of the retrieved recording data and extracts the reception state value and the broadcast content; and reproduction control means for controlling the reproduction of the received data in such a manner as to avoid presentation of the sections with deteriorated reproduction quality in the recorded broadcast content, based on the reception state value.

In this structure, the data retrieving means retrieves the recording data from the recording medium wherein the broadcast content and the reception state value are recorded. The formatting analysis means analyzes the format of the retrieved recording data, and extracts the reception state value and the broadcast content. The decoding means decodes and reproduces the extracted broadcast content, however the control on whether or not the process of decoding and reproducing will be made, and how the adjustment of the volume will be done when reproducing will follow the control taken by reproduction control means. The reproduction control means determines whether or not the decoding and reproducing process will be processed by decoding means for the extracted broadcast content. The reproduction control means will also determine how the adjustment of the volume will be made when reproducing. These determinations performed by the reproduction control means will be made based on the produced reception state value.

According to the structure, by looking at the reception state value retrieved together with the broadcast content from the recording medium, the degree of deterioration in reproduction quality of the recorded broadcast content can be determined. Therefore, the unpleasantness felt by the user is reduced by being able to skip the reproduction or adjust the volume of the section that has the possibility of giving an unpleasant feel to users when watching due to the severe deterioration.

### (9) (Outputting the reception state value)

Also, the data reproduction device of the present invention, in addition to the structure, comprises output means for outputting at least one of a representative reception state value representing each reception state value corresponding to the extracted reception state value or extracted broadcast content, in addition to outputting the extracted broadcast content.

In this structure, the output means shows the user, in a form of a figure, text or graph, at least one of the representative reception state values representing each reception state value corresponding to the extracted reception state value and extracted broadcast content on the screen of the data reproduction device at the time of reproducing the extracted broadcast content. In addition, the output means, when reproducing the extracted broadcast content, may show the user at least one of the representative reception state values representing each reception state value corresponding to the reception state value and broadcast contents extracted by using luminescence means or vibration means comprised in the data reproduction device.

According to the structure, the user watching the extracted broadcast content can easily figure out the state of the broadcast content of when it was received while watching the content, whereby the operations for pleasant reproduction such as skipping the section where the reproduction quality deteriorates can be done.

### (10) (Including the reception state value in the list display)

Also, the data reproduction device of the present invention, in addition to the structure, comprises list display creation means for creating a list display data being the basis of a list presented to a user, from attribute information of each broadcast content and the reception state value corresponding to each broadcast content, the broadcast content and reception state values being recorded in the recording medium.

In this structure, the list display creation means creates a list display data which will be the basis of the list presented to the user, from the attribute information of each broadcast content such as the program title, date and time of broadcast and the length of reproduction time that are recorded in the recording medium, and the reception state value corresponding to each broadcast content.

According to the structure, the user can easily figure out what broadcast content is recorded on the recording medium, and how the reception state of the recorded broadcast content is. Therefore, the user can easily choose the program title of the broadcast content and reproduction quality they want to watch, from the list indicated on the list display.

### (11) (Including the total reproduction time in the list display)

Also, in the data reproduction device of the present invention, in addition to the structure, when creating the list display data, the list display creation means includes in the list display data the length of reproduction time of the extracted broadcast content being determined by the reproduction control means.

In this structure, the list display creation means will include on the list display the reproduction time of the non-skipped section in the case where the predefined threshold value or the predefined time is used to reproduce the broadcast content, instead of the whole video or audio data included in the extracted broadcast content. This reproduction time of the non-skipped section is the length with a reproduction time calculated by subtracting the skipped section from the whole of the reproduction time of the broadcast content.

According to the structure, the length of the reproduction time of the extracted broadcast content that is presented to the user on the list display will be the actual reproducing time reflecting the skipping of reproduction effected by the reproduction control. Thus, the user can figure out the actual reproduction length time required to watch the broadcast content.

### (12) (Including the reception state value in the list display when the reception state value is poor)

Also, in the data reproduction device of the present invention, in addition to the structure, only in the case the reception state of the produced broadcast content is determined as poor according to the reception state value included in the recording data, the list display creation means creates a list display data in which the reception state value is added to the relevant entries from the entries of each listed broadcast content.

In this structure, the list display creation means creates a list display data by adding a figure indicating the reception state value to the relevant entry among the entries of each broadcast content that is displayed in the list, only in the case where the reception state is determined as poor for the extracted broadcast content from the extracted reception state value included in the received data.

According to the structure, for broadcast contents with good reception state, in other words for broadcast contents with good reproduction quality, the figure indicating the reception state will not be displayed. Thus, the user is not required to be conscious about the reception state of the broadcast content with good reception state, in the broadcast contents recorded on the recording medium.

### (13) (Example of reproduction control)

Also, in the data reproduction device of the present invention, in addition to the structure, if the reception state value falls below the predefined threshold value, or if the predefined time has elapsed after falling below the predetermined threshold value, the reproduction control means determines that the reception state is poor when receiving the produced broadcast content, and performs at least one of skipping the decoding process and restricting the output to output means.

In this structure, reproduction control means determines that the reception state is poor at the time of receiving the extracted broadcast content, if the retrieved reception state value exceeds the predefined threshold value or after the predefined time has elapsed after exceeding, and at least one of the controls of skipping the decoding or reproduction process, and restricting the output to output means is carried out.

According to the structure, based on the retrieved reception state value, a standard to determine the deterioration of the reproduction quality of the retrieved broadcast content is clear in carrying out the decoding and reproduction process control for the retrieved broadcast content, since a predefined threshold value is provided. Because the decoding and reproduction process is performed based on this clear standard, more accurate reproduction of broadcast contents can be operated, and the users will not feel as much unpleasantness in the reproduction of contents. In addition, when controlling the decoding and reproduction process for retrieved broadcast contents based on the retrieved reception state value, in the case the reception state of when receiving the broadcast content is firstly determined as being poor after the elapse of the predefined time after exceeding the predefined threshold value, even if the reproduction quality of the produced broadcast content is temporarily deteriorated, the reproduction of the extracted broadcast content will be continued until the predefined time elapses. Therefore, in the case where parts of the deteriorated broadcast content appear frequently in short intervals in the retrieved broadcast content, the reproduction is performed maintaining an appropriate continuity of the content, not frequently skipping the reproduction of the contents of the retrieved broadcast content. Thereby, the effect is obtained such that the unpleasantness felt by the user is reduced.

### (14) (Control of threshold value)

Also, the data reproduction device of the present invention, in addition to the structure, comprises operation means for receiving at least one or more of the operations of reproduction, fast forwarding, rewinding, stopping, pausing, volume adjustment, OK and NG entered by the user, the reproduction control means adjusting at least one of the predefined threshold value and the predefined time based on at least one or more of the operation entering received by operation means, the reception state value, and the condition of control in skipping the decoding process or restricting the output to output means.

In this structure, when reproducing the produced broadcast content, the user watching the broadcast content operates the entries of reproduction, fast forwarding, rewinding, stopping, pausing, volume adjustment, OK and NG in order to avoid the parts with deteriorated reproduction quality when watching the broadcast content, due to the deterioration of reproduction quality. The operation means receives these entry operations by the user. In the case these entry operations are carried out, the reproduction control means determines that the predefined threshold value or the predefined time is inappropriate, and changes these predefined threshold values or predefined times. The reproduction control means performs the reproduction of the extracted broadcast content using the changed predefined threshold value or predefined times.

According to the structure, the predefined threshold value and the predefined time are adjusted from the entry operations which are feedback from the user evaluating the reproduction quality of the extracted broadcast content at the final stage. Thus, appropriate reproduction can be performed reflecting the evaluation standard the user has towards the reproduction quality.

### (15) (Deleting the contents with poor reception state value)

Also, in the data reproduction device of the present invention, in addition to the structure, from among each broadcast content recorded in the recording medium, the list display creation means searches for a content that has poor reception state with the reception state value falling below the predefined threshold value, and creates a list display data which is presented to the user, including the content with poor reception state as an entry; the operating means receives a select command from the user, the select command being based on the presented list display data; and the data reproduction device further comprises deletion means for deleting the selected content from the recording medium all together in response to the received select command by the user.

In this structure, the list display creation means searches for contents across the broadcast contents recorded on the recording medium with poor reception state having the reception state value fall below the predefined threshold value, and creates a list display data including the content with poor reception state as an entry and presents this to the user. The operation means receives the user's select command based on the presented list display data. The deletion means deletes the selected contents from the recording medium all together in response to the received user's select command. After the deletion of the selected contents, the list display creation means again creates a list display data from each broadcast content recorded on the recording medium, and presents the list display to the user.

According to the structure, the contents with poor reception state, in other words broadcast contents with poor reproduction quality can be easily deleted from the recording device and it is possible to present the user a list with only the contents with good reception state. Thus, the user is not required to select the broadcast content to reproduce by consciously distinguishing the broadcast contents with good reception state and the broadcast contents with poor reception state.

Meanwhile, the data recording device and the data reproduction device may be realized by hardware, or may be realized by running a program on the computer. More specifically, a program according to the present invention is an information-processing program causing a computer to operate as at least the aforementioned reception state acquisition means / recording data creation means /recording control means / formatting analysis means /reproduction control means / decoding step / list display creation means / list display control means, and a recording medium according to the present invention stores this information-processing program therein.

When this information-processing program is run by a computer, the computer operates as the data recording device or the data reproduction device. Therefore, similar to the data recording device and the data reproduction device, in the case the reception state of the received broadcast content is poor and the reception state value falls below the predefined threshold value, the broadcast content that has deteriorated due to the poor reception state is not recorded. Consequently, the amount of the recording medium consumed when recording the broadcast content may be reduced by not recording the broadcast content that has deteriorated due to the poor reception state. In addition, the amount of recording medium consumed to record the reception state value may be reduced by recording the reception state value on the recording medium only in the case the reception state value changes, without recording all of the generated reception state values. In addition, the degree of deterioration in the reproduction quality of the recorded broadcast content may be determined by looking at the reception state value retrieved with the broadcast content from the recording medium. Therefore, the unpleasantness felt by the user is reduced, by skipping the reproduction or adjusting the volume of the part which due to the severe deterioration in broadcast content may give unpleasantness when being watched by the user.

### BRIEF DESCRIPTION OF DRAWINGS

Fig. 1 is a functional block diagram of a data recording device of the present invention.
Fig. 2(a) is an explanation view illustrating an example of a picture indicating a reception state displayed on a screen of the data recording device or a data reproduction device of the present invention.
Fig. 2(b) is an explanation view illustrating an example of a text indicating the reception state displayed on the screen of the data recording device or the data reproduction device of the present invention.
Fig. 2(c) is an explanation view illustrating an example of a graph indicating the reception state displayed on the screen of the data reproduction device of the present invention.
Fig. 2(d) is an explanation view illustrating an example indicating the reception state by luminescence or vibration in the data recording device or the data reproduction device of the present invention.
Fig. 3 is an explanation view regarding a packet structure of a digital broadcast.
Fig. 4(a) is an explanation view illustrating a configuration example of recording of the received data and the reception state value.
Fig. 4(b) is an explanation view illustrating another configuration example of recording of the received data and the reception state value.
Fig. 4(c) is an explanation view illustrating another configuration example of recording of the received data and the reception state value.
Fig. 5 is a functional block diagram of the data recording device of the present invention, which is a functional block diagram of a different section to Fig. 1.
Fig. 6 is a functional block diagram of the data reproduction device of the present invention.
Fig. 7 is a graph explaining relationship between the reception state and reproduction control per elapsed time.
Fig. 8 is a functional block diagram comprising a list display function in the data reproduction device of the present invention.
Fig. 9 is an explanation view illustrating an example of a list display of the broadcast contents.
Fig. 10 is an explanation view illustrating an example of a figure describing whether the reception state is good or poor.
Fig. 11 is an explanation view illustrating another example of the list display of the broadcast contents.
Fig. 12 is an explanation view illustrating the relationship between the graph of the reception state of the contents and the lack in the received contents.
Fig. 13 is an explanation view illustrating the relationship between contents data of one screen in a file of the received data, index information in an index file, a timestamp and index.
Fig. 14 is an explanation view illustrating the retrieving method of the index information in the case 10X reproduction is performed utilizing the index files.
Fig. 15(a) is a chart listing the timestamps of the index information utilized in the 10X reproduction, in the case the 10X reproduction is performed under the condition that there is no lack in the index information.
Fig. 15(b) is a chart listing the timestamps of the index information utilized in the 10X reproduction, in the case the 10X reproduction is performed using the index information under the condition that there is a lack of index information and the missing index information is not covered.
Fig. 16 is an explanation view illustrating the relationship between the contents data in the file of the received data, the index information inside the index file, the timestamp and the index, in the case there is a lack of received data due to the poor reception state.
Fig. 17 is an explanation view illustrating the relationship between the contents data inside the file of the received data, the index information inside the index file, the timestamp and the index, in the case there is a lack of received data due to the poor reception state, and the missing index information is made up for.
Fig. 18 is an explanation view illustrating the relationship between the contents data inside the file of received data, index information in the index file, the timestamps and the index, in the case there is a lack of received data due to the poor reception state, and the missing contents and the missing index information are made up for.

### BEST MODE FOR CARRYING OUT THE INVENTION

### [Data recording device]

### <The function block diagram of the data recording device>

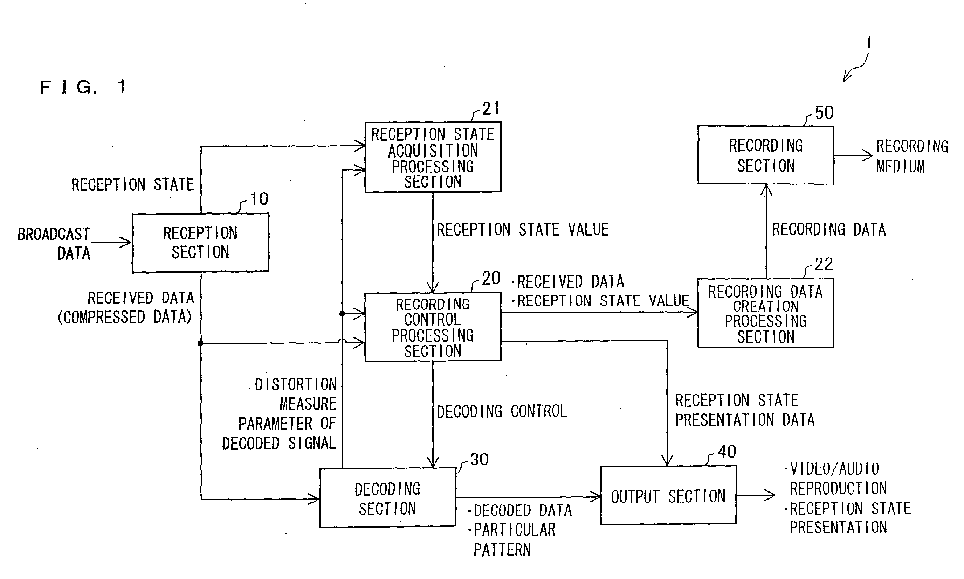

The data recording device 1 of the present invention is explained using the functional block diagram illustrated in Fig. 1.

A reception section 10 includes an antenna, a tuner, and a demodulator adopting a demodulation method such as an Orthogonal Frequency Division Multiplex, and the other components. The reception section 10 receives broadcast data from a broadcasting station or the like, and passes the received data obtained by demodulating the broadcast data to a recording control processing section 20 (recording control means) and a decoding section 30 (decoding means).

The decoding section 30, in the case of digital broadcast, performs decoding process of a compressed data included in the received data received by the reception section 10 (reception means), and passes to an output section 40 (output means) the decoded data decoded from the compressed data. In the case of analog broadcast, the received data received from the reception section 10 is passed to the output section 40 as it is, as decoded data. The compressed data will be explained later. The decoding section 30, in the case there are no received data to receive from the reception section 10, a particular pattern is passed to the output section 40 as the decoded data.

As the data of the particular pattern, a bitmap pattern of black or blue is an example of a video-paticular pattern, and PCM data for no sound is an example of an audio-paticular pattern.

The decoding section 30 further comprises a high-pass filter which can detect signals out of visible/audible range, for example ultrasonic waves exceeding 30KHz. The proportion of this ultrasonic wave included in the decoding signal created based on the decoded data may be indicated as the disturbance measure parameter in the decoding signal, and the decoding section 30 can pass this disturbance measure parameter in the decoding signal to the recording control processing section 20.

A reception state acquisition processing section 21 (reception state acquisition means) receives the reception state of the broadcast wave from the reception section 10, and receives the disturbance measure parameter in the decoding signal from the decoding section 30, and creates a value indicating the reception state of the broadcast wave (hereafter referred as 'reception state value'), and passes this to a recording control processing section 20. The creation method of the reception state value will be described in detail later.

The recording control processing section 20, when the data recording device 1 records a broadcast content, passes the received data acquired from the reception section 10 and the reception state value acquired from the reception state acquisition processing section 21 to the recording data creation processing section 22 (recording data creation means). In addition, when the data recording device 1 stops the recording of the broadcast content, the recording control processing section 20 stops the process of passing the received data and the reception state value to the recording data creation processing section 22. If the recording control processing section 20 does not pass to the recording data creation processing section 22 any received data or reception state value, the recording data creation processing section 22 does not receive any received data or reception state value for that period, so in the data recorded on the recording medium (hereafter referred as 'recording data'), the received data and the reception state value that is not received will not be included. The recording data is a data composed of at least either one of the received data or the reception state value.

In addition, the recording control processing section 20 may pass the acquired reception state value to the recording data creation processing section 22 only when the reception state value changes from the reception state value acquired from the reception state acquisition processing section 21. The change in reception state value is specifically when the reception state value previously passed to the recording data creation processing section 22 and the reception state value currently acquired is different. With having such structure, the reception state value will only be recorded as the recording data if there is a change in the reception state value at the recording of the reception state value. This allows the recording data to decrease in size.

Furthermore, the recording control processing section 20 may pass only the reception state values of the starting point and the ending point of the period with poor reception state, to the recording data creation process section 22. With having such structure, the size of the recording data can furthermore be reduced.

The recording control processing section 20 may pass the received data to the recording data creation processing section 22 with no regards to whether the reception state indicated by the reception state value is good or poor, or may pass the received data to the recording data creation processing section 22 only when the reception state is good. The data passed to the recording data creation processing section 22 in the case the reception state is poor will be described later.

In order to present the reception state to the user, the recording control processing section 20 creates a data for presenting the reception state to the user based on the reception state value (hereafter referred as 'reception state presentation data'), and passes this to the output section 40.

The recording data creation processing section 22 creates the recording data from the received data and the reception state value received from the recording control processing section 20, and passes this to a recording section 50 (data recording means). The method for creating the recording data from the received data and the reception state value will be described in details later.

The recording section 50 records the recording data received from the recording data creation processing section 22 onto a recording medium such as a flash memory or a hard drive.

The recording medium which records the recording data is not limited to a particular physical method of recording, for example may adopt an optical method, a magnetic recording medium, or the other method besides a semiconductor memory.

The output section 40 presents the user with the decoded data received from the decoding section 30 as an image or sound via a display device such as a liquid crystal display and audio reproduction device such as a speaker, meanwhile presenting the user with the reception state based on the reception state presentation data received from the recording control processing section 20.

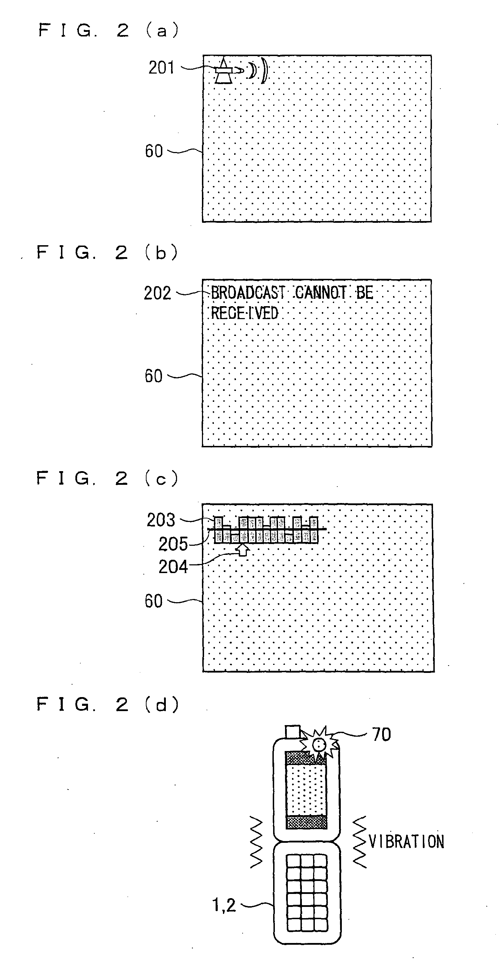

As the reception state presentation data, a picture 201 on a screen 60 where the received contents will be displayed changing in response to the reception state as described in Fig. 2(a), and a text 202 indicating the reception state on the screen 60 as described in Fig. 2(b) are possible. In addition, when displaying on the screen 60 these picture 201 and text 202 being the reception state presentation data, as described in Fig. 2(d), the reception state may be presented to the user using at least one or more of the methods of a beeping noise and reproduction of music, a luminescence by a luminescence section 70 (luminescence means), or a vibration of the data recording device 1 itself.

### <The compressed data>

In the aforementioned process, as the creation method of the compressed data the decoding section 30 decodes, for example if it is a video then methods compliant with international standards such as MPEG4 (Moving Picture Experts Group) are possible, and if it is an audio then methods compliant with international standards such as MPEG2 AAC (Advanced Audio Coding) are possible.

As the decoded data as a result of decoding the compressed data, if it is a video then data such as a bitmap pattern, if it is an audio then data such as a PCM (Pulse Code Modulation) are possible.

### <Method for creating the reception state value>

The information indicating the reception state being used by the reception state acquisition processing section 21 for creating the reception state value may be an electric field strength, a bit error rate (BER), a transmission delay level of broadcast waves, or the disturbance measure parameter in the decoding signals acquired from the decoding section 30, or other information. However it is not limited to these. In addition, the value calculated by combining these multiple types of information indicating the reception state may also be used as the final reception state value.

In the case the broadcast is a digital broadcast, in order to create the reception state value, the structural error information of the broadcasted compressed data may be used. For example, when the decoding section 30 decodes the received data received from the reception section 10, the case in which the data that should be the predefined value of the received data however is not in the predefined value or the like is relevant to this structural error information.

In addition, with the data recording device 1 with a wireless phone function, the electric field strength of the radio waves used in wireless phones may be used as the information indicating the reception state. By also using this electric field strength, it is possible to create the reception state value reflecting the reception state more accurately.

### <Method for passing data to the recording data creation processing section 22 when the reception state has worsened>

The recording control processing section 20 compares the reception state value received from the reception state acquisition processing section 21 with the predefined threshold value, and in the case the reception state value falls below the predefined threshold value, in other words, in the case the quality of the received broadcast content is deteriorated, the recording control processing section 20 may not pass at least one of either the received broadcast content or the created reception state value to the recording data creation processing section 22. To what degree of quality deterioration can be accepted differs depending on the user, so the threshold value is preferable being a structure adjustable by a user.

In this case, the recording control processing section 20, in passing the created recording data to the recording data creation processing section 22 for recording onto the recording medium, in the case the reception state value exceeds the predefined threshold value and the reception state is good, the recording control processing section 20 passes the received broadcast content and reception state value to the recording data creation processing section 22. However, in the case the reception state value falls below the predefined threshold value and the reception state is poor, at least one of the received broadcast contents and the reception state value is not passed to the recording data creation processing section 22.

For example, in the case the reception state value falls below the predefined threshold value, the received broadcast content is not passed to the recording data creation processing section 22, and only the created reception state value is passed to the recording data creation processing section 22.

With this structure, the amount of the memory used by the recording data on the recording medium in the case the reception state is poor can be reduced to an amount necessary for recording only the reception state value.

In addition, in another example, in the case the reception state value falls below the predefined threshold value, the created reception state value is not passed to the recording data creation processing section 22, and only the received broadcast content is passed to the recording data creation processing section 22.

With this structure, the amount of the memory used by the recording data on the recording medium in the case the reception state is poor can be reduced to the amount necessary for recording only the broadcast content.

### <Method for passing the data to the recording data creation processing section 22 when the reception state has changed>

Furthermore, the recording control processing section 20 may pass the created reception state value to the recording data creation processing section 22 only when the reception state value changes when comparing the reception state value received from the reception state acquisition processing section 21 with the reception state value received immediately before.

In the case the reception state value is exceeding the predefined threshold value, the recording control processing section controls such that if there is no change in reception state value as a result of comparing the current reception state value and the reception state value immediately before, only the received broadcast content is passed to the recording data creation processing section 22, but if there is a change in the reception state value, both received broadcast content and the reception state value are passed to the recording data creation processing section 22. In addition, in the case where the reception state value is not exceeding the predefined threshold value, the recording control processing section 20 controls the recording such that if there is no change in the reception state value as a result of comparing the current reception state value and the reception state value immediately before, no received broadcast content nor reception state value is passed to the recording data creation processing section 22, but if there is a change in reception state value, only the reception state value is passed to the recording data creation processing section 22.

With this structure, it is possible to reduce the consumption in the memory used in recording the reception state value onto the recording medium.

### <Data passed to the recording data creation processing section 22 when the reception state has worsened or changed>

At the point the reception state has become poor or changed, the recording control processing section 20 may pass a data indicating that a recording of the received data has been skipped (hereafter referred as 'skip mark'), instead of passing the received data to the recording data creation processing section 22. The skip mark may include a value indicating the amount of data of the received data that has been skipped in the recording. The skip mark may be recorded in, for example the reserve area of the transport stream packet of the MPEG2 system standard, the descriptor area, or in the data area added on the front or back of each TS packet, or may be recorded in a different file, as similar to the recording method of the reception state value to the recording medium as described later.

### <Method for the composition with the received data and the method for recording such composition of the reception state value and the received data>

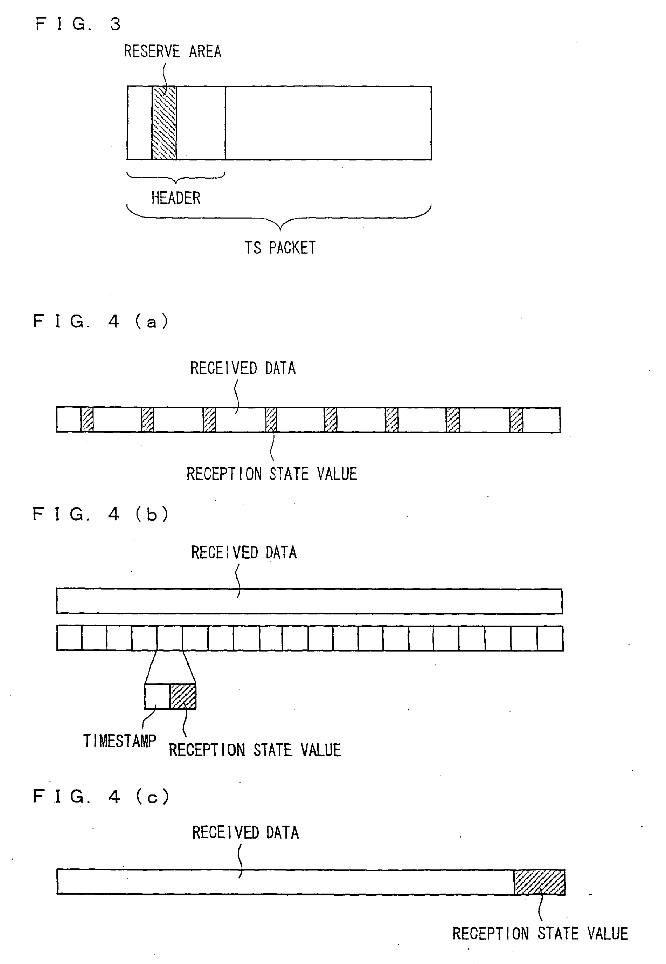

For example if the received data has a structure of a TS packet in a MPEG2 system standard or the like, an example of the recording data as illustrated in Fig. 3 is applicable in which the reception state value in the area reserved to be used in the future is recorded within the header of the TS packet (hereafter referred as 'reserve area'). With this structure, each TS packet and the reception state value of when those TS packets were received can be associated with each other, meanwhile even the data reproduction devices noncompliant to retrieving the reception state value recorded in the reserved area can record the reception state value to the recording medium without influencing the reproduction of the recorded broadcast content.

In addition, in the case of digital broadcast, if there is the data area called a descriptor in the received packet, wherein the descriptor has a particular identifier field, a data length field and a field of the data itself, the reception state value may be stored utilizing the descriptor area not defined by the broadcast standard. With reproduction devices noncompliant to these undefined descriptors, this descriptor section may be skipped using the value of the identifier field and the data length field, therefore even with noncompliant reproduction devices, there is no influence in the reproduction performance.

If taking the example of the MPEG2 system standard, in the case the recording state value is recorded onto the video data area or the audio data area, it is recorded on the ES (Elementary Stream), which is the raw data of the video or audio. However, practically in this case, in order to record on the video or audio data, recording to an uncompressed raw data is assumed. That is to say, in the case digital broadcast is received, the recording of the reception state value can be carried out by a method in which after overwriting the received broadcast content on the decoded data already once being decoded, the received broadcast content is recoded, then a PES (Packetized Elementary Steam) is created, and the TS packet is created (the part performing the recoding, creation of the PES, creation of the TS packet are not illustrated in the functional block diagram in Fig.1). In addition, in the case the reception state value is recorded on an unused area, the reception state value is recorded on a stuffing area of the PES or the TS packet, that is, such as a stuffing byte inside the conditional coding of a PES header, the stuffing byte sandwiched between an option field and a payload inside an adaptation field of the TS packet, or a stuffing packet described as PID=0x1FFF. In addition, in the case where the reception state value is recorded on the descriptor area, it is recorded on the additional information other than the video or audio data area, for example on a part of an area used as sections or tables such as a PAT (Program Association Table) or a NIT (Network Information Table). Descriptor stands for 'Descriptor' described in the English MPEG2 system standard document.

As other configuration examples to record the recording data on the recording medium, in the case the recording data is recorded by adding a data area to each TS packet in order to speed up the access to the recording data, the reception state value may be recorded in this added data area as illustrated in Fig. 4(a).

The access to the recording data speeds up since depending on the style of adding the data area, the data size may be made in multiples of 32 or 64 as easily handled by a processor. For example, the size of one TS packet provided in the MPEG2 system standard is 188 bytes. Consequently, if the data of this size is handled with a processor or the like, the data area to this packet will become 192 bytes by adding 4 bytes as the data area to this packet, which makes this a multiple of 32 or 64 being readily handled by the processor. Thus, the transfer of the recording data is possible with a small memory transfer command.

In the case the data configuration example illustrated in Fig. 4(a) is applied, this method will be programmed such that the recording data creation processing section 22 will add 4 bytes of the data area for each packet, and the reception state value will be recorded in the added data areas.

As a further example of a recording data configuration, as illustrated in Fig. 4(b), there is a method where the reception state value corresponding to the received data of a certain period is recorded in a different file to the received data, together with the timestamp of the received data. With this structure, even with the data reproduction devices noncompliant to retrieving the reception state value file, it is possible to reproduce the recorded broadcast content by retrieving only the received data file without referring to the reception state value file.

In the example of the above recording data configuration, two files respectively including the received data and the reception state value are created. Consequently, in order to simplify the management of the files, the reception state value file may be linked to the end of the received data file and made as one file, when the recording of the recording data to the recording medium is complete, as described in Fig. 4(c). With this structure, the data reproduction devices noncompliant to the retrieving of the reception state value file can correctly decode the received data in the first half of the file, and reproduce the recorded content. However the reception state value data will not be decoded correctly, and will be determined as false data and is ignored in such data reproduction devices.

In addition, the following structure may be possible as a different configuration in the case of performing the recording of digital broadcast. In the case of digital broadcast, the received data, especially the video data, significantly vary in the amount of data composing one screen depending on illustration of the image of the received data. Thus, the degree in elapsed recording time from the starting point of the recording and the degree of increase in recorded received data does not correspond 1 by 1, and is disproportionate. Therefore, the location of the data of the screen at the time of the recorded broadcast content (hereafter referred as 'timestamp') cannot be easily found in the received data file (hereafter referred as 'index').

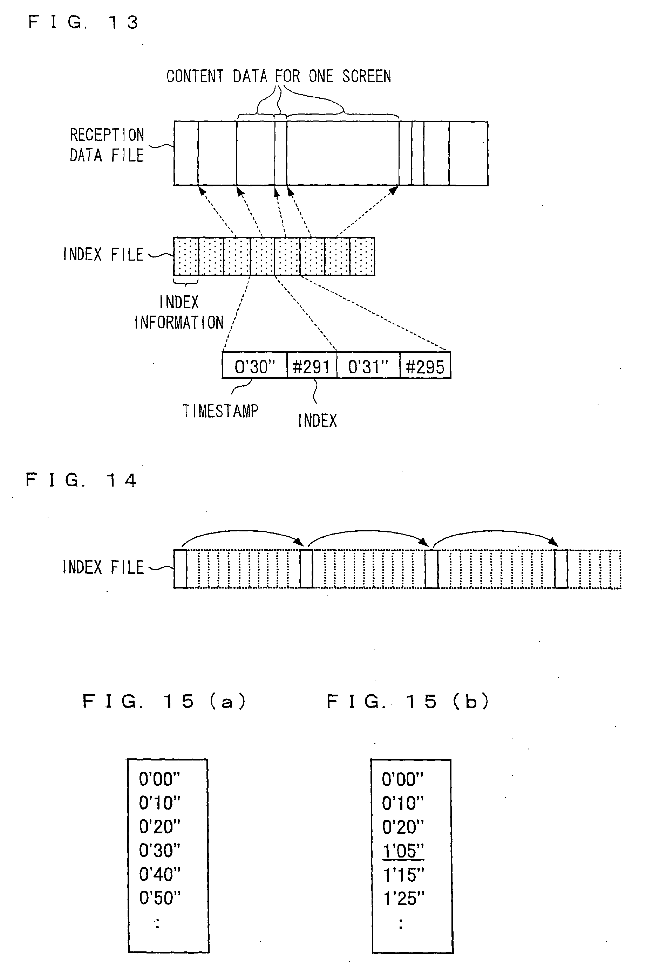

Therefore, the information with the timestamp and the index being related (hereafter referred as 'index information') may be recorded into a different file (hereafter referred as 'index file') as illustrated in Fig. 13. In the example illustrated in Fig. 13, one index information includes one timestamp and one index, and an index file is composed of a plurality of index information being assembled in chronological order. In addition, it is illustrated in Fig. 13 that each index information is related to each content data of one screen's worth inside the received data file respectively.

The index information, in the data reproduction device, may be used for the fast forward reproduction, rewinding reproduction, or cueing. For example, when operating 10X fast-forwarding reproduction, in the case the index information including the timestamp of one-second intervals is inside the index file as illustrated in Fig. 14, the index information is read with intervals of ten index information, such that the first index information is read, then the next nine index information are skipped and the eleventh index information is read. In other words, the timestamp retrieved will be, as described in Fig. 15(a), the timestamp with intervals of ten seconds. 10x fast-forwarding reproduction is realized by producing the data for one screen included in the broadcast content, and reproducing with the data at intervals of one second, based on the index included in each index information retrieved from the index file.

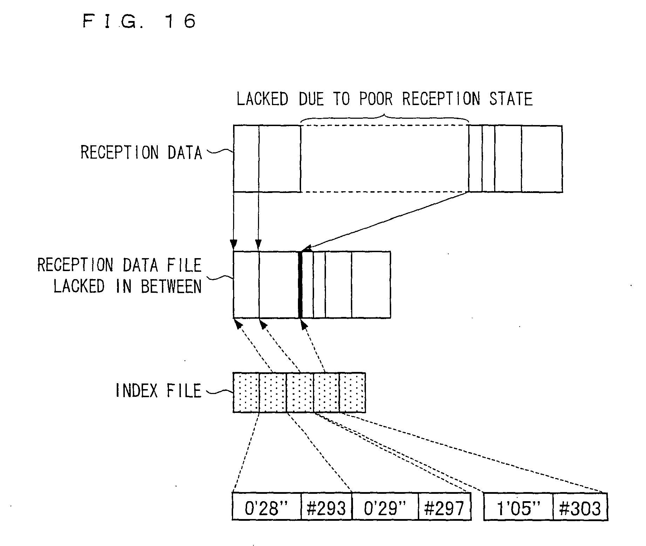

In the aforementioned method, a problem occurs when the data is reproduced when in a poor reception state. In Fig. 16, an example of the received data file and the index file is illustrated in the case the section with poor reception state could not be received and a part of the broadcast content is lacked. In this example, the received data is lacked for the period the reception state is poor, therefore the index information corresponding to the received data also is lacked from the index file. In this example, the reception state is poor from the timestamp of times 0'29" to 1'04", and the broadcast content could not be received. In the index file, after the index information with the timestamp time as 0'29", the index information with the timestamp of time 1'05" is recorded. In the case the fast forwarding reproduction is performed using this index file, the content of the time 1'05" will be reproduced one second after the reproduction of the content of the time 0'29" as described in Fig. 15(b), and will not be a 10x speed reproduction.

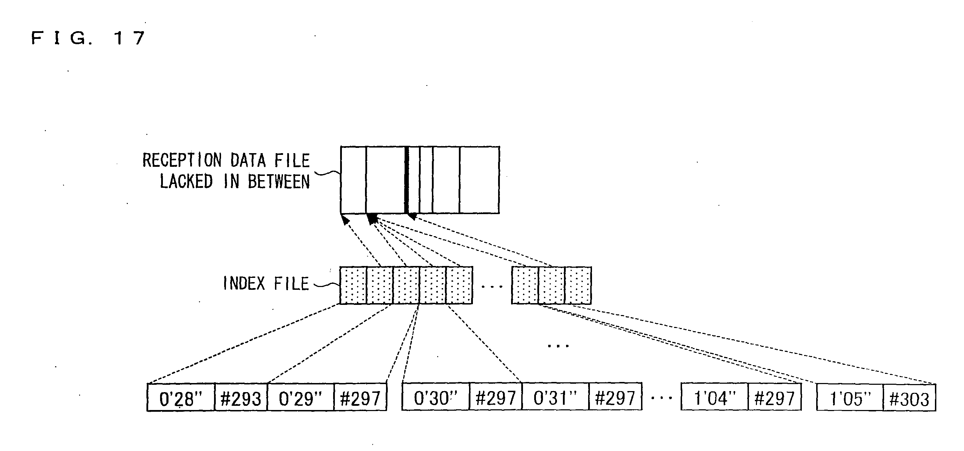

Consequently, in the data recording device of the present invention, the recording control processing section 20 performs the following processes when the reception state is poor and the broadcast content cannot be received. As illustrated in Fig. 17, the recording control processing section 20, after the index information immediately before the lack in the broadcast content (time on timestamp as 0'29", index #297), creates the index information relating the timestamp increasing with a certain interval (in this example a one-second interval) from the final time the broadcast content was properly received (in this example, time 0'29") with the index of the final screen that could be received (in this example, index #297). With this index information the lacking index information is made up for. The created index information is passed to the recording data creation processing section 22 as in the normal process. The recording data creation processing section 22 creates the index file from the passed index information, and creates the recording data from the received data and the reception state value.

With this structure, the index information still will be recorded, even for the sections in which broadcast content is lacked due to the poor reception state. Therefore, when the data reproduction device performs special reproduction by using the index information such as fast forwarding, rewinding, and resuming reproduction from the position it stopped previously, the index information with the timestamp times lined up with a certain time interval may be used as illustrated in Fig. 16(a) even for sections lacking the broadcast content. Thus, it is possible to reproduce in the reproducing speed the user commands. Of course, the broken data due to the poor reception state is not recorded, thereby the presentation of the broken data to the user may obviously be avoided.

In the aforementioned explanation, an example in digital broadcast with the timestamp included in the broadcast content was described, however the present invention is not limited to this example. Specifically, in the case the broadcast is an analog broadcast and the timestamp is not included in the broadcast content, or in the case the timestamp could not be attained due to the poor reception state for digital broadcast, the reception control processing section 20 keeps the valid and update timestamp as the timestamp, and may find the new timestamp adding the elapsed time after the timestamp could not be obtained from the broadcast content to the timestamp kept in the recording control processing section 20.

In addition, in each packet of the digital broadcast, there may be cases where a flag indicating whether or not an error is included in the packet is included. Normally, it is possible for a digital broadcast receiver to skip the reproduction of the packet by referring to the flag.

Therefore, in the case the reception state of the packet is poor even if the flag is not indicating an error, the recording data creation processing section 22 may rewrite the error flag in the received packet. For example, when the reception state value falls below the threshold value and is determined that the reception state is poor, the error flag may be rewritten from 0 indicating 'no error' to 1 indicating 'with error'. For the error flag mentioned here, for example, a transport_error_indicator of the 7^{th} bit in the 2^{nd} byte of the TS packet is assumed. Generally, TS packets with error flags of 1 are specially treated as an error.

With this structure, even the data reproduction devices noncompliant to the reproduction of the content utilizing the reception state value can perform the appropriate reproduction of the recorded content by utilizing the error flag provided based on the reception state value created by the data recording device of the present invention.

In addition, as another method for recording the reception state value in the recording data, either one or more of the data of the video (picture, figure, text or the like) or audio (beeping sound, music or the like) of the received data may be combined with the information indicating the reception state, so that such combined data is recorded as the recording data to the recording medium. For example, the recording data may record a text image of 'cannot receive' and the image of the received data, when the reception state is under a certain value; the recording data may record a beeping sound or the like indicating poor reception state, together with the audio of the received data. Only the video or audio data indicating the poor reception state may be created or created beforehand to be inserted instead of the received data, but not to be combined with the received data. In this arrangement, a time length of the image or the sound being combined or inserted does not have to be the same as the time the reception state fell below the threshold value.

With this structure, by reproducing the recording data being the content even if it is the data reproduction device noncompliant to the retrieving of the reception state value, the reception state of the time when receiving the content may be presented to the user. Furthermore, in the case the length of the video or the audio combined or inserted in the recording medium is shorter than the time the broadcast content is lacked due to the reception state falling below the threshold value, the whole viewing time will become short, thereby saving the viewing time.

In the structure of creating the index information, the index of the final screen that could be received is used when creating the new index information that makes up for the lacking index information caused due to the lack of broadcast content from poor reception state, however the present invention is not limited to this, and may be as the following structure.

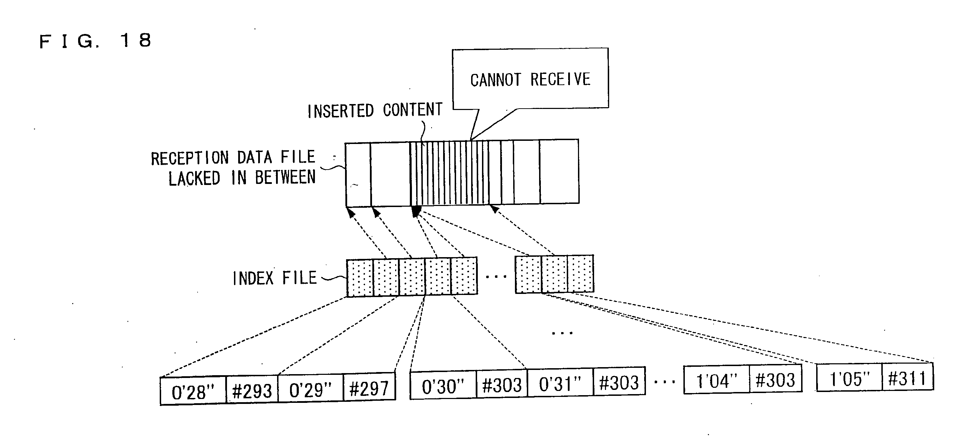

As illustrated in Fig. 18, the recording control processing section 20 may insert a timestamp and a content indicating the poor reception state after the index information immediately before the lack in the broadcast content (time on timestamp as 0'29", index #297). The timestamp increases with a certain interval (in this example a one-second interval) from the final time the broadcast content was properly received (in this example, time 0'29"). The recording control processing section 20 creates the index information to make up for the lacked index information, the created index information associating index (in this example, index #303) of the inserted content with the inserted content. The content inserted into the received data indicates poor reception state, for example including a message such as "cannot receive".

With this structure, the index information is used when the data reproduction device performs the special reproduction such as fast forwarding or rewinding, thereby the inserted content is reproduced. Therefore, even with the data reproduction devices without a special structure, the non-received section in the broadcast content can be presented to the user while performing special reproduction.

In addition, the reception state value may be recorded in an invisible or inaudible format such as a 'watermark', in the synchronous period of the video, the range of the audio or the like. With this structure, the reception state of the time of recording the content can be presented to the user with the data reproduction device having a watermark decoding function. The recording data being the content can be reproduced even with the data reproduction device noncompliant to the watermark decoding function.

### <Example of another structure of the reception state acquisition processing section 21>

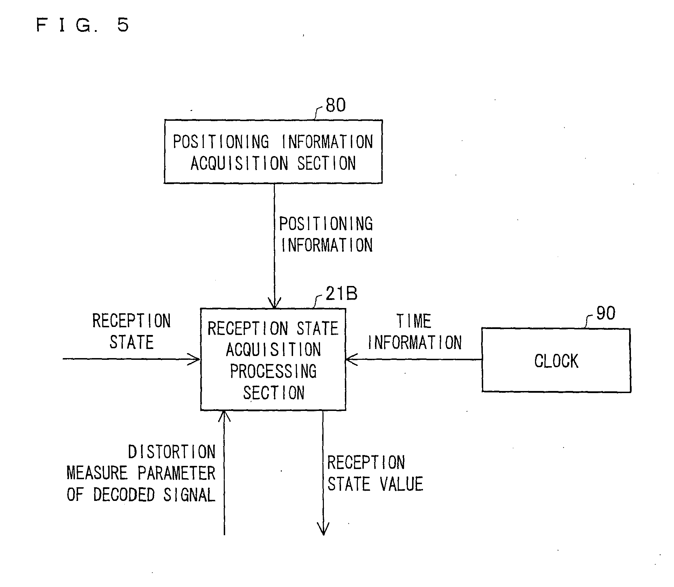

Fig. 5 illustrates a functional block diagram indicating a different configuration example of the reception state acquisition processing section 21, that is a reception state acquisition processing section 21B. Only the related parts to the reception state acquisition processing 21 is illustrated in this functional block diagram, and the other parts are the same as the functional block diagram as illustrated in Fig. 1.

The reception state acquisition processing section 21B is connected with a positional information acquisition section 80 (positional information acquisition means). The reception state acquisition processing section 21B can acquire the positional information of the current data recording device 1 from the positional information acquisition section 80. In this case, the reception state value in the current position of the data recording device 1 can be acquired from the obtained positional information and a reception state map recording the relationship between the position on the map and the reception state value created beforehand. The reception state map will be described later. In addition, this reception state map can be used to indicate to the user which direction to move to recover the reception state.

In addition, instead of the reception state map, the reception state value may be acquired by storing the location of towers emitting broadcast waves, and converting a distance between the closest tower of the towers to the current location of the data recording device 1 and the current location of the current data recording device 1.

Furthermore, the influence to the reception state of the broadcast waves due to the Doppler effect is calculated by using the transfer speed of the data recording device 1, the transfer speed being calculated by the time information obtained from a clock 90 and the positional information obtained from the positional information acquisition section 80. The influence to the reception state of the broadcast waves due to the Doppler effect may be used for the calculation of the reception state value.

By structuring as above, it is possible to obtain a more accurate reception state value, and present to the user a method to improve the reception state.

### <Method for creating a reception state map>

This reception state map may be provided with the reception state map being created by a maker which investigated the reception state of each point, and incorporated in the data recording device 1 as a ROM (Read Only Memory). The reception state map may also be created on the nonvolatile inner memory of the data recording device 1 with the data recording device 1 learning the reception state of each point involved by movement of the user carrying the data recording device 1. In addition, combination of being provided as a ROM from a maker and the learning from the user's movement is also effective.

Furthermore, in the case of the data recording device 1 having a wireless telephone function, the scheme of sharing the reception state maps being created on each individual data recording device 1 by the learning of each device and collected in the server of the provider is applicable. In this case, the reception state maps will be shared via the providers.

### <Effect of the invention>

With any of these structures, the data recording device 1 of the present invention attain such an effect that in the case the reception state value is overwritten in the existing area of the received broadcast content, the reception state can be recorded together with the received broadcast data without increasing the size of the recording data. In addition, since the reception state of the received data to be recorded can be informed to the user, it is possible to encourage the user to move the location of the data recording device 1 or change the direction of the antenna, in order that the reception state may become better. In addition, the data recording device 1 of the present invention can reduce the amount of memory used in the recording medium to record the recording data, by not recording on the recording medium the parts with poor reception state in the received broadcast content.

### [Data reproduction device]

### <Functional block diagram of the data reproduction device>

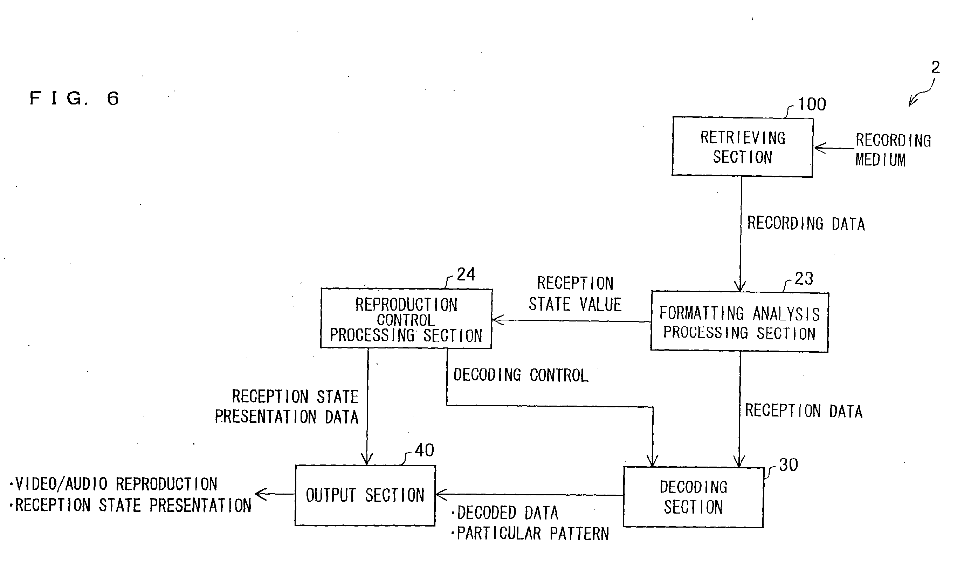

The structure of the data reproduction device 2 of the present invention and the reproduction performance is explained using the functional block diagram illustrated in Fig. 6.

A retrieving section 100 (data retrieving means) retrieves the recording data from the recording medium and passes this to a formatting analysis processing section 23 (formatting analysis means).

The formatting analysis processing section 23 analyzes the recording data acquired from the retrieving section 100, separates this to the received data and the reception state value, and outputs the received data to the decoding section 30, and the reception state value to a reproduction control processing section 24 (reproduction control means).

The reproduction control processing section 24 generates a decoding control signal based on the reception state value acquired from the formatting analysis processing section 23, and outputs the decoding control signal to the decoding section 30. More specifically, when the reception state value is lower than a threshold value (hereafter referred as 'decoding control threshold value'), or when the reception state value state continuously stays below the decoding control threshold value for a certain amount of time, the reproduction control processing section 24 performs the control of the decoding section 30, such that the decoding process of the received data is stopped. The decoding control threshold value will be explained later.

In addition, the reproduction control processing section 24 generates a reception state presentation data being a marker indicating the reception state of the time of recording the content from the reception state value acquired from the formatting analysis processing section 23, and passes this to the output section 40. The method for presenting the reception state presentation data will be explained later.

The decoding section 30 performs the decoding process of the received data entered from the formatting analysis processing section 23 based on the decoding control signal entered from the reproduction control processing section 24, and passes the decoded data decoded from the received data to the output section 40. In the case the received data for decoding is not passed on from the formatting analysis processing section 23, a particular pattern indicating that there is no data is passed to the output section 40 as the decoded data.

The output section 40 acquires the decoded data from the decoding section 30, acquires the reception state presentation data from the reproduction control process section 24, combines this with the decoded data, and performs reproduction of the video and audio through the screen 60 and the speakers of the data reproduction device 1.

### <Method for presenting the reception state presentation data>

As an example of the output 40 presenting a combined data on the screen 60 of the data reproduction device 2 after combining the reception state presentation data with the decoded data, for example a picture 201 illustrated in Fig. 2(a) and a text 202 illustrated in Fig. 2(b) may be raised. In addition, as illustrated in Fig. 2(d), at least one or more of the methods such as reproducing a predetermined sound or music, illuminating the luminescence section 70 included in the data reproduction device 1, and vibrating the data reproduction device 1 may be used.

### <Decoding control threshold value>

The decoding control threshold value is an arbitrary value, and the user may specify the value, or may specify the adjustment of the decoding control threshold value higher or lower than the current threshold value. In addition, the decoding control of the decoding section 30 effected by the reproduction control processing section 24 may be the control of the skipping reproduction explained later, other than the control of muting the video and audio being the reproducing content.

In the case the user additionally operates volume adjustment to adjust volume, or performs fast forwarding or rewinding operations after performing the reproduction of the recorded content from this decoding control, the reproduction control processing section 24 determines that the decoding control threshold value used in the decoding control is inappropriate. For example, when the user performs fast forwarding operation when reproducing the content, the operation section not illustrated (operation means) receives the entry, and passes this to the reproduction control processing section 24. The reproduction control processing section 24 determines that due to the excessively low decoding control threshold value the content that should have been skipped as an error and not reproduced was reproduced, and performs the reproduction of the content after raising the decoding control threshold value. On the contrary, it may be arranged such that when the user performs the rewinding operation in reproducing the content, the operation section not illustrated (operation means) receives this entry, and passes this to the reproduction control process section 24, and the reproduction control processing section 24 performs adjustment such as lowering the decoding control threshold value.

More specifically, for example, in the case the skipping reproduction control is performed in a condition with a higher decoding control threshold value than the value desired by the user, the user will rewind the content and try to watch the section where the content was skipped, so in the condition of 'performing the skipping reproduction control' with the 'rewinding operation' being entered, the adjustment of 'lowering the decoding control threshold value' is performed. Adversely, in the case the condition of having the decoding control threshold value lower than the value the user desires, and outputs the image and sound with noise without the control of the skipping reproduction or the like, the user would perform operations to fast forward and lower the volume, therefore when in the condition of 'not performing the skipping reproduction control' and 'operation to fast forward or lower the volume' is entered, the adjustment to 'raise the decoding control threshold value' is performed.

The operations of the user used for the determination is not limited to the volume adjustment, fast forwarding or rewinding. The reproduction control processing section 24 may directly receive evaluation towards the reproduction quality of the contents such as 'OK' and 'NG' from the user, and may also be some other operations.

Furthermore, the decoding control threshold value may be changed according to the reception state of the whole recorded content. For example, when the reception state of the whole content is basically good, the reproduction quality can be improved by providing the decoding control threshold value high. Adversely, when the reception state of the whole content is basically poor, it can be controlled to set a low decoding control threshold value, such that the contents are reproduced as much as possible, accepting disturbance in content reproduction to some degree caused by errors recorded at the time of reception. The reception state of the whole content may be found by having the reproduction control processing section 24 perform various calculations such as the average, maximum and minimum of the recorded reception state.

In addition, a fuzzy value may be used for the decoding control threshold value. In the case the fuzzy value is used, such control may be adopted that the degree of the muting for the image and sound when reproducing the content is a fuzzy value.

With this structure, the decoding control threshold value holds flexibility, and the contents recorded in an environment with the reception state value fluctuating around the decoding control threshold value may be reproduced pleasantly.

### <Performance of the skipping reproduction>

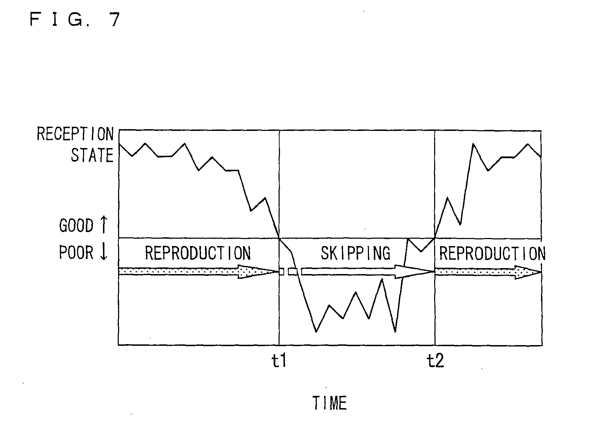

Fig. 7 illustrates the relationship between the change in the reception state involved in the time elapse when recording the content with the data recording device 1, and the reproduction performance when reproducing the recorded content with the data reproduction device 2.

The following is the performance of the skipping reproduction of the content in which the reproduction control processing section 24 performs in the case the reception state of when the content was recorded is poor.

Firstly, the condition in which the reception state is higher than the decoding control threshold value is regarded as good, and the condition in which the reception state is lower than the decoding control threshold value is regarded as poor. Fig. 7 illustrates the case where the reception state is first in a good condition, however the reception state becomes poor at time t1, and recovers to a good condition at time t2, when receiving contents with the data recording device 1.

In this case, the reproduction control processing section 24 outputs the decoding control signal to stop the decoding and reproduction to the decoding section 30, only when the reception state falls below the decoding control threshold value. In the case of the example illustrated in Fig. 7, the content between times t1 to t2 will be skipped and not reproduced. The decoding section 30 performs the starting and stopping of the decoding and reproduction in accordance with the control signal from the reproduction control processing section 24. By doing so, it is possible to automatically skip the reproduction of the content in the period with poor reception state in the recorded content.

Whether or not the skipping reproduction will be performed may be switched on or off depending on the case. For example, it may be arranged such that the skipping reproduction for normal reproduction is performed whereas the skipping reproduction is not performed when in special reproduction such as fast forwarding or rewinding. In addition, different decoding control threshold values may be used for each respective reproduction, such as in the case of normal reproduction a high decoding control threshold value is used so that only the parts with good reproduction quality will be reproduced, whereas in the case of special reproduction a low decoding control threshold value is used so that it reproduces even the parts with deteriorated reproduction quality. In addition, it can also be arranged such that the performance of the skipping reproduction can be invalidated by the operation of the user.

It may be arranged such that in the case a skip mark indicating that a recording was skipped is included in the received data received from the formatting analysis processing section 23, the reproduction control processing section 24 will (i) inform the decoding section 30 about the skipping, so that the connection of the part where the content was skipped can be connected smoothly, and (ii) display 'the reproduction was skipped' or the like on the screen 60 via the output section 40.

Furthermore, it may be arranged such that in the case the skip mark includes a value indicating the amount of data that has been skipped, the reproduction control processing section 24 calculates the time that has been skipped from the amount of data that has been skipped, and displays a message such as 'reproduction of 10 seconds has been skipped' on the screen 60 via the output section 40.
Furthermore, it may be arranged such that the decoding section 30 being informed from the reproduction control processing section 24 that it is a part that was not recorded when recording the content, performs special reproduction such as outputting no image nor sound for the actual time relevant to the skipped period, not reproducing the content immediately after the skipping.

With this structure, it is possible to inform the user that there is a part that was not recorded in the recorded content due to the poor reception state.

### <Example of another configuration of the reception state presentation data>

The output section 40 may display a distribution graph 203 of the reception state for the whole of the recorded content and an arrow 204 indicating the reproduction position of the current content, as illustrated in Fig.2(c), based on all the reception state values included in the recorded content. In the same figure, the arrow 204 indicates where the currently reproduced section is in the whole content, and at the same time the distribution graph 203 indicates the reception state when recording the content. For the method for creating the distribution graph 203, a method is used where the reproduction control processing section 24 receives the reception state value included in one of the contents recorded from the formatting analysis processing section, and calculates an appropriate vertical bar width from the reproduction time of the content and the size of the area that can be used to display the distribution graph 203 on the screen 60 and the height of each vertical bar from the average of the reception state value included in the period relevant to the width of this vertical bar. In this figure, a line 205 of the distribution graph 203 indicates the decoding control threshold value. The user can know how the contents corresponding to each vertical line is reproduced by looking at the distribution graph 203 if each vertical bar is over or under the line 205. However, in the case the fuzzy value is used when performing the decoding control, the decoding control threshold value may be represented by a strip figure with thickness having width in the vertical directions on the figure, not by the line 205 being one line.

With this structure, it is possible to present to the user the part that is currently being reproduced in the whole of the content reproduction time, as well as presenting the reproduction control such as the reception state of the whole content, or the reproduction skipping based on the reception state. Thus, the user may visibly figure out the condition related to the reproduction of the content easily.

### <List display function>

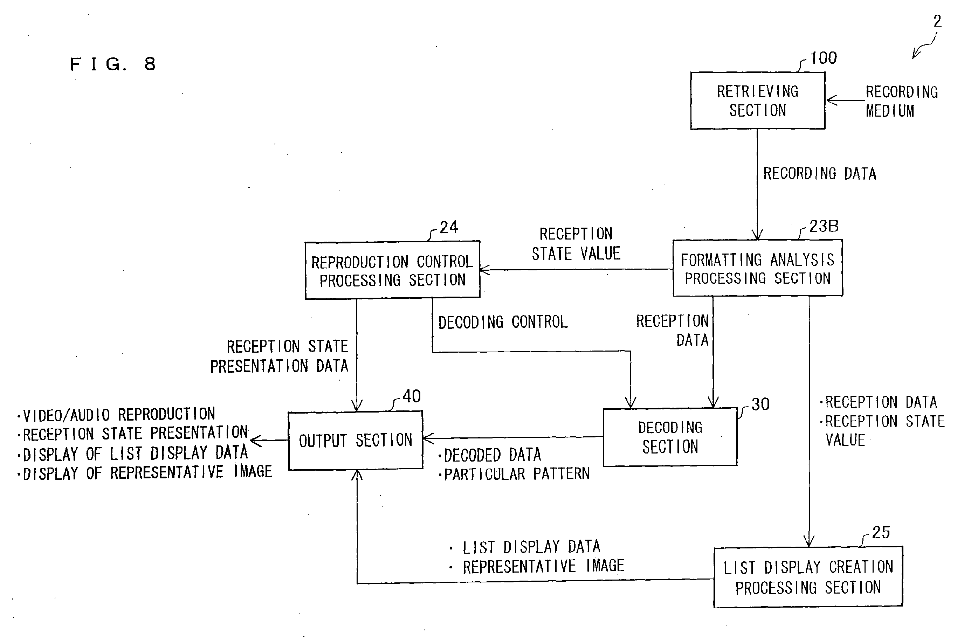

The data reproduction device 2 of the present invention may comprise a list display function. In Fig. 8, a functional block diagram of the data reproduction device 2 is illustrated, comprising the list display function. This figure will be used in explaining the list display function of the data reproduction device 2 of the present invention. The function block parts other than a list display creation processing section 25 and the output section 40 being the function block of the functional block diagram illustrated in Fig. 8, has the same function as the function block illustrated in the functional block diagram of the data reproduction device 2 in Fig. 6.

The retrieving section 100 retrieves one or more of the recording data from the recording medium, and passes this to the formatting analysis processing section 23B. The retrieving section 100 used here is the same as the retrieving section 100 as illustrated in Fig. 6.

Firstly, the retrieving section 100, following a command from the formatting analysis processing section 23B, retrieves the recording data from the recording medium having a plurality of recording data recorded, and passes this to the formatting analysis processing section 23B.

The formatting analysis processing section 23B analyzes each data acquired from the retrieving section 100, extracts the received data and the reception state value, and passes this to the list display creation processing section 25 (list display creation means). The function of the formatting analysis processing section 23B is the same as the formatting analysis processing section 23 in the functional block diagram illustrated in Fig. 6, except for the addition of a function passing the received data and the reception state value to the list display creation processing section 25.

The list display creation processing section 25 creates a list display data created from the received data including a title, the broadcast time or the like, and passes this to the output section 40 in addition to the reception state value entered from the formatting analysis processing section 23B. As the list display data, other than the title and broadcast time, information such as a summary of the program, the performers, whether there is a data broadcast or not, or the reproduction time may be added. In the case there are a plurality of reception state values corresponding to the received data entered from the formatting analysis processing section 23B, the value derived from these plurality of reception state values may be provided as the reception state value representing the received data. As the method for deriving a reception state value representing the received data from a plurality of reception state values, a method of finding the value from the proportion of over or under the steady value, average, maximum, minimum, variance, standard deviation, mode value, median, or the like may be possible.

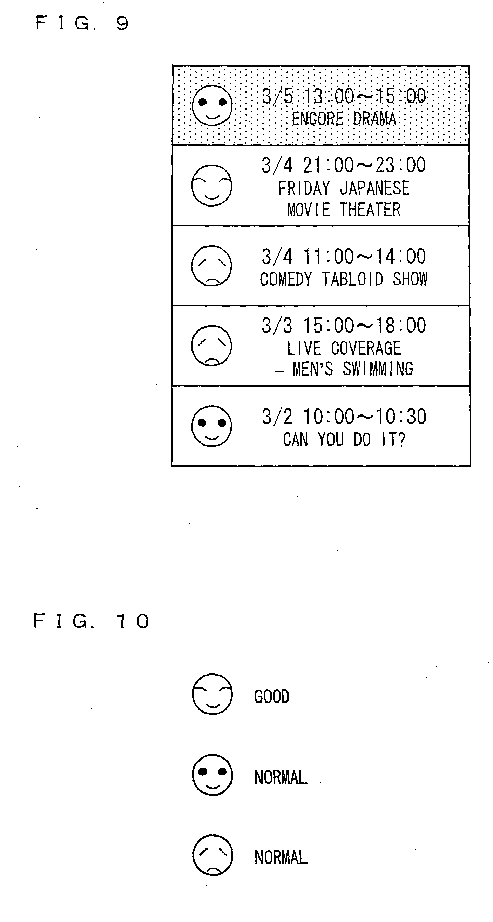

The output section 40 displays the list display data acquired from the list display creation processing section 25 on the screen 60 (see Fig. 2). As the displaying method, for example as illustrated in Fig. 9, a combination of the recording date and time and title of the contents with a figure describing whether the reception state is good or poor as illustrated in Fig. 10 may be possible.

In the case a plurality of reception state values running with the elapse of time are included in one received data, the distribution of the reception state along with the time elapse may be displayed by a graph 205 as illustrated in Fig. 11. In Fig. 11, a figure (mark) is displayed in addition, indicating that the reception state of the encore drama recorded between 13:00 to 15:00 on March 5, was basically good when seen as a total.

In addition, a representative image of the received data (thumbnail) may be included in the list display data. In this case, the list display creation processing section 25 acquires the image at the point of the change in reception state value included in the received data exceeding or falling below the decoding control threshold value as a still image, and may pass this to the output section 40 as a representative image.

By structuring as such, the data reproduction device 2 of the present invention presents the name of the received data and the reception state of this received data in a list display, so the user can easily identify the reproduction quality of the content before reproducing.

### <Example of another list display>

When the list display creation processing section 25 creates the list display data, a figure indicating whether the reception state is good or poor as illustrated in Fig. 10 may be added in the aforementioned method, though only to the contents with poor reception state. With this structure, the user is not required to be conscious of the reception state for contents with good reception state, since the figure indicating the reception state will not be displayed.

Furthermore, the list display creation section 25 may comprise a function which search and select only the contents with poor reception state from the list display data.

When a command to search for contents with poor reception state is entered from the operation section not illustrated, the list display creation processing section 25 searches for contents from the recorded contents with the aforementioned reception state value representing the received data being below the decoding control threshold value, and creates a select list from those contents. The list display creation processing section 25 rewrites each entry of the list display data based on the select list, so those contents can be distinguished from other contents with good reception state. Furthermore, if a command to delete these contents is entered from the operation section not illustrated, the list display creation processing section 25 passes the deletion command and the select list to a deletion processing section (deletion means) not illustrated. The deletion processing section not illustrated refers to the select list, and deletes the relevant contents from the recording medium. After the completion of the deleting, the list display creation process section 25 again retrieves the received data from the recording medium via the formatting analysis processing section 23B, creates the list display data, and presents the list of contents to the user via the output section 40.

With this structure, the contents with poor reception state can be easily deleted from the recording medium, therefore the user will not be required to consciously distinguish the contents with poor reception state and the contents with good reception state, in selecting the contents to reproduce.

In addition, in the structure in which the skipping reproduction is performed for contents with poor reception state, the reproduction time of the content will be shorter than the reproduction time of the content without the performance of skipping reproduction, therefore the reproduction time in the case the skipping reproduction is performed may be calculated from the reception state value included in the received data and the decoding control threshold value, and be presented to the user by adding this into the list display data.

### <Additional statement>

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

Lastly, each block of the data recording device 1, especially the recording control processing section 20, the reception state acquisition processing section 21, and the recording data creation processing section 22, and each block of the data reproduction device 2, especially the formatting analysis processing section 23 and 23B, the reproduction control processing section 24, and the list display creation processing section 25, may be composed by a hardware logic, or may be realized by a software using the CPU as follows.

Specifically, the data recording device 1 and the data recording device 2 comprises a CPU (central processing section) performing the commands of the control program realizing each function, a ROM (read only memory) storing the program, a RAM (random access memory) expanding the program, and a memory device (recording medium) such as a memory storing the program and various data. The object of the present invention is also achievable, by providing the recording medium with the program code of the controlling program of the data recording device 1 and the data reproducing device 2 (executable program, intermediate code program, source program) which is the software realizing the aforementioned functions recorded retrievable from a computer to the data recording device 1 and the data reproduction device 2, and having the computer (or CPU or MPU) perform the program by retrieving the program code recorded on the recording medium.

As the recording medium, for example, tape-related mediums such as magnetic tape or cassette tape, disc-related mediums including magnetic discs such as floppy (registered trademark) disk/ hard drive and optical discs such as CD-ROM/MO/MD/DVD/CD-R, card-related mediums such as IC card (including memory card)/optical card, or semiconductor memory-related mediums such as mask ROM/EPROM/EEPROM/flash ROM may be used.

In addition, the program code may be provided through a communication network by composing the data recording device 1 and the data reproduction device 2 connectable to the communication network. The communication network is not particularly limited, and for example the Internet, intranet, extranet, LAN, ISDN, VAN, CATV communication network, virtual private network, telephone connection network, mobile communication network, satellite communication network and the like are applicable. In addition, the transmissive medium composing the communication network is not particularly limited, for example, it is applicable with wired lines such as IEEE1394, USB, power-line carrier, cable TV line, or telephone line, and also with wireless lines such as infrared radiation such as IrDA and remote control, Bluetooth (registered trademark), 802.11 wireless, HDR, mobile-phone network, satellite connection, or terrestrial digital network. The present invention may also be realized in the form of a computer data signal with the program code being realized by electronic transmission, mounted in the carrier.

### INDUSTRIAL APPLICABILITY

According to the data recording device of the present invention, when receiving broadcast content and recording this to the recording medium, the reception state value indicating the reception state can also be effectively recorded on the recording medium. In addition, according to the data reproduction device of the present invention, in reproducing the broadcast content recorded on the recording medium, appropriate reproduction such as the skipping of the sections with poor reception state may be performed, based on the reception state value. Therefore, the invention is broadly and favorably applicable to portable telephone machines, portable information terminals and other various systems comprising a broadcast reception function and functions reproducing recorded broadcast.

## Claims

1. A data recording device which records received broadcast data, comprising:
reception state acquisition means for acquiring a reception state of the broadcast content and creating a reception state value indicating whether the reception state is good or poor;
recording data creation means for associating the received broadcast content with the reception state value and creating a recording data including the broadcast content and reception state value associated with each other; and
recording control means for comparing the reception state value with a predefined threshold value, and controlling whether to respectively pass the received broadcast content and the reception state value to recording data creation means based on the reception state value.

2. A data recording device as set forth in claim 1, further comprising:
data recording means for recording the recording data to a recording medium,
the recording control means comparing the current reception state value with a reception state value immediately before the current reception state value in controlling the passing of the received broadcast content and the reception state value to recording data creation means in recording on the recording medium, and passing the reception state value to recording data creation means only in the case the reception state value has changed.

3. The device as set forth in claims 1 or 2, wherein the reception state acquisition means calculates the reception state value by utilizing at least one or more of the values of electric field strength, bit error rate, and delay level of broadcast or wireless communication.

4. The device as set forth in claims 1 or 2, comprising:
positional information acquisition means for acquiring a positional information of the data recording device; and
a reception state map on which relationship between a position on the map and a reception state value is recorded,
the reception state acquisition means retrieving a reception state value of a current position of the data recording device from the reception state map.

5. A data recording device as set forth in any one of claims 1 to 4, wherein the recording data creation means creates the recording data including the reception state value in at least one or more of the areas of video data area, audio data area, unused area and descriptor area of the broadcast content.

6. A data recording device as set forth in any one of claims 1 to 5, wherein:
the recording control means obtains a timestamp which is elapsed time information of the received broadcast content by a predetermined method, according to whether the reception state value is good or poor and whether or not time information is contained in the broadcast content;
the recording control means acquires record positional information which indicates where the data composing the received broadcast content is positioned in a broadcast content;
the recording control means creates index information in which the timestamp and the record positional information associate with each other, and passes such to recording data creation means; and
the recording data creation means records the index information as an index file.

7. A data recording device as set forth in claim 6, wherein:
if the reception state value falls below the predefined threshold value, the recording control means creates at least one of a video content and audio content indicating a poor reception state, or retrieves at least one of a video content and audio content indicating a poor reception state which is already created beforehand and stored, and inserts the at least one of a video content and audio content to the broadcast content;
the recording control means creates an index information utilizing record positional information of the inserted content; and includes the created content and the index information in the information to be passed to recording data creation means.

8. A data reproduction device wherein the data reproduction device reproduces a recorded broadcast content, comprising:
data retrieving means for retrieving the recording from the recorded medium in which the recording data is written, the recording data including the reception state value and broadcast content received from the data recording device as set forth in any one of claims 1 to 7;
formatting analysis means for analyzing a format of the retrieved recording data and extracting the reception state value and the broadcast content; and
reproduction control means for controlling the reproduction of the received data in such a manner as to avoid presentation of the sections with deteriorated reproduction quality in the recorded broadcast content, based on the reception state value.

9. A data reproduction device as set forth in claim 8, comprising output means for outputting at least one of a representative reception state value representing each reception state value corresponding to the extracted reception state value or extracted broadcast content, in addition to outputting the extracted broadcast content.

10. A data reproduction device as set forth in claims 8 or 9, comprising list display creation means for creating a list display data being the basis of a list presented to a user, from attribute information of each broadcast content and the reception state value corresponding to each broadcast content, the broadcast content and reception state values being recorded in the recording medium.

11. A data reproduction device as set forth in claim 10, wherein when creating the list display data, the list display creation means includes in the list display data the length of reproduction time of the extracted broadcast content being determined by the reproduction control means.

12. A data reproduction device as set forth in claims 10 or 11, wherein only in the case the reception state of the produced broadcast content is determined as poor according to the reception state value included in the recording data, the list display creation means creates a list display data in which the reception state value is added to the relevant entries from the entries of each listed broadcast content.

13. A data reproduction device as set forth in any one of claims 8 to 12, wherein if the reception state value falls below the predefined threshold value, or if the predefined time has elapsed after falling below the predetermined threshold value, the reproduction control means determines the reception state is poor when receiving the produced broadcast content, and performs at least one of skipping the decoding process and restricting the output to output means.

14. A data reproduction device as set forth in claim 13, comprising:
operation means for receiving at least one or more of the operations of reproduction, fast forwarding, rewinding, stopping, pausing, volume adjustment, OK and NG entered by the user,
the reproduction control means adjusting at least one of the predefined threshold value and the predefined time based on at least one or more of the operation entering received by operation means, the reception state value, and the condition according to claim 13.

15. A data reproduction device as set forth in claim 14, wherein:
from among each broadcast content recorded in the recording medium, the list display creation means searches for a content that has poor reception state with the reception state value falling below the predefined threshold value, and creates a list display data which is presented to the user, including the contents with poor reception state as an entry; and
the operating means receives a select command from the user, the select command being based on the presented list display data;
the data reproduction device further comprising:
deletion means for deleting the selected content from the recording medium all together in response to the received select command by the user.

16. A program for causing a computer to operate as each means comprised in the data recording device as set forth in any one of claims 1 to 7.

17. A program for causing a computer to operate as each means comprised in the data reproduction device as set forth in any one of claims 8 to 15.

18. A computer-readable recording medium in which a program as set forth in claims 16 or 17 is recorded.
